Europäisches Patentamt

European Patent Office

Office européen des brevets

(19)

(11) Veröffentlichungsnummer: **0 066 846
B1**

(12) **EUROPÄISCHE PATENTSCHRIFT**

(45) Veröffentlichungstag der Patentschrift:
13.02.85

(51) Int. Cl.⁴: **B 63 B 27/22**, B 65 G 29/02

(21) Anmeldenummer: **82104863.4**

(22) Anmeldetag: **03.06.82**

(54) **Gurtförderanlage in einem selbstentladenden Schiff.**

(30) Priorität: **09.06.81 DE 3122817**

(43) Veröffentlichungstag der Anmeldung:
**15.12.82 Patentblatt 82/50**

(45) Bekanntmachung des Hinweises auf die Patenterteilung:
**13.02.85 Patentblatt 85/7**

(84) Benannte Vertragsstaaten:
**AT BE CH DE FR GB IT LI NL SE**

(56) Entgegenhaltungen:
**DE - A - 2 627 013
DE - A - 2 717 100
DE - B - 1 120 978
FR - A - 2 263 148
US - A - 1 603 558
US - A - 3 470 999**

**GLÜCKAUF, Band 116, Nr. 1, Januar 1980, Essen (DE),
H. GERDES: "Neue Entwicklungen in der
Steilfördertechnik", Seiten 15-18**

(73) Patentinhaber: **Conrad Scholtz AG, Am Stadtrand 55/59,
D-2000 Hamburg 70 (DE)**

(72) Erfinder: **Paelke, Jürgen, An der Este 13, D-2117 Tostedt
(DE)**

(74) Vertreter: **Lieck, Hans-Peter, Dipl.-Ing., Lieck & Betten
Patentanwälte Maximiliansplatz 10,
D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gurtförderanlage in einem selbstentladenden Schiff nach dem Oberbegriff des Anspruches 1.

Gurtförderanlagen für Schüttgut zur Entladung von Schiffen werden heute in zunehmendem Maße eingesetzt, da dadurch eine saubere und vollständige, vor allem aber schnelle Entleerung der Schiffe möglich ist, so daß die Liegezeiten der Schiffe verringert und die damit verbundenen Kosten gesenkt werden.

Zunehmende Bedeutung gewinnen in diesem Zusammenhang neben Förderanlagen, die in einem Hafen ortsfest installiert sind, Gurtförderanlagen für selbstentladende Schiffe. Eine derartige Gurtförderanlage ist aus der DE-B 2 717 100 bekanntgeworden. Diese Gurtförderanlage für selbstentladende Schiffe weist einen am Schiffsboden in Schiffslängsrichtung verlaufenden Längsförderer auf, über den das auszuladende Schüttgut zum Bug des Schiffes transportiert wird. Hier ist ein Deckbandförderer mit C-förmiger Förderstrecke vorgesehen. Er dient zur Überkopf-Förderung von Schüttgut vom Längsförderer zu einer oberhalb des Laderaumes des Schiffes gelegenen Abgabestelle, von wo aus das Schüttgut über einen Abgabeförderer weiter transportiert wird. Bei dieser Förderanlage geht der am Schiffsboden in Schiffslängsrichtung verlaufende Längsförderer unmittelbar im Bereich des Buges in den C-Förderer über. Es ist also neben dem im Bereich des Buges zur Überkopf-Förderung notwendigen Deckgurt nur ein einziger Tragegurt vorgesehen. Dabei beziehen sich die hier verwendeten Begriffe Tragegurt und Deckgurt auf die Situation vor der C-förmigen Förderstrecke; danach vertauschen sich die Funktion von Trage- und Deckgurt im Zuge der Förderstrecke; der als Tragegurt dienende Längsfördergurt hat vor der Abwurfstelle die Funktion eines Deckgurtes. Mit dieser Gurtförderanlage mit nur einem Längsförderer kann jedoch bei den heute eingesetzten breiten Großraumschiffen eine vollständige und schnelle Entladung nicht sichergestellt werden.

Es sind deshalb auch Gurtbandförderanlagen für selbstentladende Schiffe bekanntgeworden, bei denen zwei am Schiffsboden in Schiffslängsrichtung verlaufende, jeweils mit einem gemuldeten Fördergurt versehene Längsförderer vorgesehen sind. Diese Längsförderer transportieren das zu entladende Schüttgut in Richtung des Schiffsbugs bzw. Schiffhecks zu einer Übergabestelle, von der aus das Schüttgut über einen Steilförderer zu einer Abgabestelle auf dem Schiffsdeck transportiert wird. Die Übergabestelle besteht im wesentlichen aus zwei Schrägen, über die das Schüttgut von den Längsförderern zu der tiefer gelegenen gemeinsamen Aufgabestelle des Steilförderers rutscht (FR-A-2 263 148).

Diese Gurtförderanlage weist aber den Nachteil auf, daß die Förderkapazität in der Zeiteinheit durch die gemuldeten Längsförderer beschränkt ist. Außerdem bauen die Längsförderer sehr hoch, da ihre Fördergurte im Obertrum transportieren und mit diesem über das Niveau der Schrägen angehoben werden müssen. So geht wertvoller Laderaum unterhalb der Obertrume verloren.

Aufgabe der Erfindung ist es, eine Gurtförderanlage für selbstentladende Schiffe mit zwei am Schiffsboden in Schiffslängsrichtung verlaufenden Längsförderern und mit einem an einem Ende des Schiffes vorgesehenen, das Fördergut auf das Schiffsdeck transportierenden Steilförderer zu schaffen, die eine sehr hohe Förderkapazität hat und gleichzeitig eine weitgehend vollständige Nutzung des Schiffsraums als Laderaum gestattet.

Die Aufgabe wird erfindungsgemäß mit der in Anspruch 1 und bezüglich vorteilhafter Ausgestaltungen in den Unteransprüchen gekennzeichneten Gurtförderanlage gelöst.

Durch die erfindungsgemäße Gurtförderanlage für selbstentladende Schiffe wird die Förderkapazität deutlich erhöht, ohne dabei den benötigten Bauraum im Schiffskörper zu vergrößern. Dies folgt zum einen daraus, daß die Fördergurte der Längsförderer als Wellenkantengurte ausgeführt sind, wobei sich die Höhe der Wellenkanten nach den geforderten Förderkapazitäten richtet. Andererseits ist aber auch der für die Wellenkantengurte benötigte Bauraum im Schiffsboden vorhanden, und zwar auch dann, wenn Wellenkanten mit einer Höhe von vielleicht 400 mm und mehr verwendet werden. Dies folgt daraus, daß die Fördergurte der Längsförderer mit ihrem Untertrum fördern, während das Obertrum mit nach unten hängenden Wellenkanten unmittelbar unter einer dachförmigen Schutzhaube geführt ist, die jeweils oberhalb und parallel zu den Längsförderern angeordnet sind. Die Anhebung des Fördergurtes auf das für die Übergabe notwendige Niveau erfolgt platzsparend unmittelbar vom tiefliegenden Niveau der Fördergurt-Untertrume der Längsförderer durch die Ausbildung der im Bereich der Übergabestelle vorgesehenen Umlenktrommeln als Hubräder, wobei sich der Durchmesser dieser Hubräder am Ende des Förderers nach der gewünschten Höhe richtet.

Um sicherzustellen, daß im Bereich jedes Hubrades das zu entleerende Schüttgut bei der Überkopf-Förderung nicht aus dem Fördergurt fällt, weist das Hubrad eine in Umfangsrichtung umlaufende Ausnehmung auf, in der der jeweilige Fördergurt umläuft. Dabei greift das Hubrad mit zwei stirnseitigen, durch die in Umfangsrichtung umlaufende Ausnehmung gebildeten Flanschen an den überstehenden, profilfreien Randbereichen des Wellenkantengurtes des Längsförderers an und überträgt dort die notwendigen Zugkräfte. Die Tiefe der Ausnehmung bzw. das Maß der überstehenden Flansche entspricht der Höhe der Wellenkanten. Durch diese Maßnahmen wird eine deckelförmige Abdichtung durch die Hubräder für den von den Wellenkanten begrenzten Förderraum der Fördergurte der Längsförderer erzielt.

Im folgenden ist die Erfindung mit weiteren vorteilhaften Einzelheiten anhand eines schematisch dargestellten Ausführungsbeispieles näher erläutert. Dabei zeigt im einzelnen

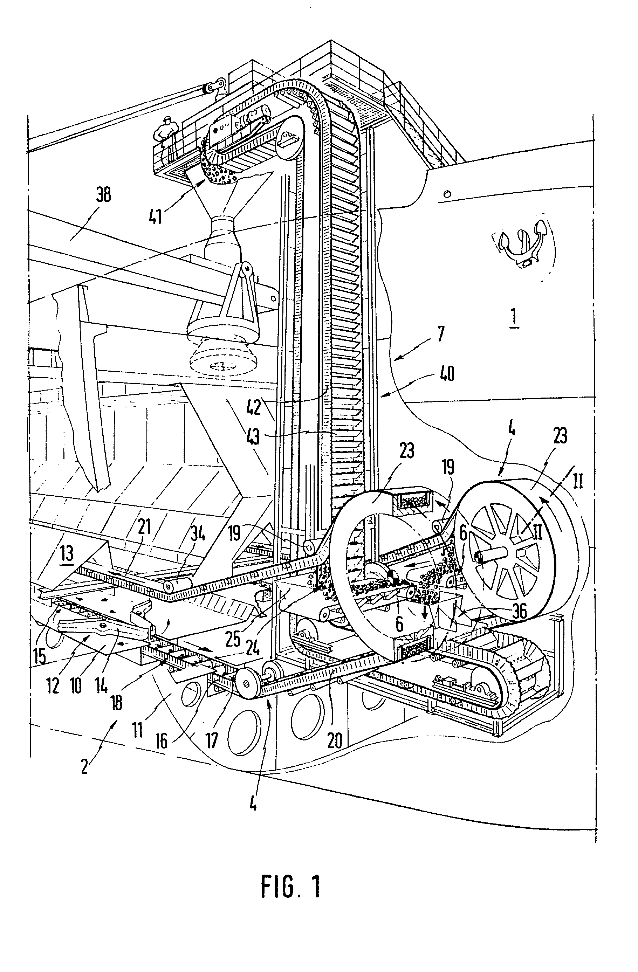

Fig. 1 einen Schnitt durch ein Schiff mit einer dreidimensionalen Ansicht der erfindungsgemäßen Gurtförderanlage;

Fig. 2 einen Schnitt längs der Linie II/II in Fig. 1.

In der Zeichnung ist ein Schiff für den Schüttguttransport mit 1 und eine Gurtförderanlage darin mit 2 bezeichnet. Die Gurtförderanlage 2 umfaßt zwei in Schiffslängsrichtung angeordnete Längsförderer 4, zwei in Schiffsquerrichtung vorgesehene kurze Querförderer 6 als Übergabeeinrichtung und einen weiteren in Schiffslängsrichtung ausgerichteten Senkrechtförderer 7.

Die Längsförderer 4 sind noch unterhalb einer inneren Wandung 10 eines Schiffsbodens 11 angeordnet. Oberhalb eines jeden Längsförderers 4 ist parallel zu diesem jeweils ein Räumungsschlitz 15 in der inneren Wandung 10 und im Abstand darüber eine dachförmige Schutzhaube 13 vorgesehen. Jedem Längsförderer 4 ist ein Räumpflug 12 zugeordnet, der entlang eines jeden Längsförderers 4 oberhalb des Schiffsbodens 11 bewegt wird und über steuerbare Räumzangen 14 das zu entleerende Schüttgut über 400 bis 500 mm hohe Spalten zwischen der dachförmigen Schutzhaube 13 und der inneren Wandung 10 und über den jeweiligen Räumungsschlitz 15 auf die Längsförderer 4 auflädt. Die Fördergurte 18 der Längsförderer 4 weisen seitlich aufgesetzte Wellenkanten 16 und dazu quer ausgerichtete in Fördergurtlängsrichtung in Abständen angeordnete Mitnehmerleisten 17 aus Elastomer-Werkstoff auf.

Die Fördergurte 18 der Längsförderer 4 werden jeweils an ihrem einen Ende über zwei nicht näher gezeigte Umlenktrommeln und an ihrem anderen Ende im Bereich der Querförderer 6 zum weiteren Transport des zu entleerenden Schüttgutes um ein Hubrad 23 geführt. Die Fördergurte 18 fördern mit ihrem Untertrum 20 das zu entleerende Schüttgut aus dem Schiffs-Laderaum dem Hubrad 23 zu. Das Hubrad 23 dient zur Überkopf-Förderung des Schüttgutes, das unmittelbar in bezug auf die Fördergurtumlaufrichtung hinter dem Hubrad 23 bei einer Abwurfstelle 24 abgegeben wird. Jedem Hubrad ist eine Ablenktrommel 19 zugeordnet, die außen am ablaufenden Obertrum 21 des Fördergurtes 18 angreift und dessen Umschlingung des Hubrades vergrößert.

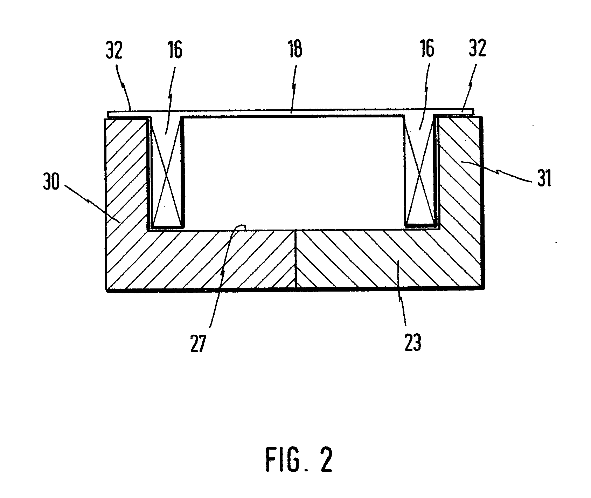

Nachfolgend wird das Hubrad 23 anhand von Fig. 2 genauer beschrieben. Das Hubrad 23 weist eine in Umfangsrichtung umlaufende Ausnehmung 27 auf, in die der Fördergurt 18 der Längsförderer 4 eingreift. Durch die Ausnehmung 27 werden zwei seitliche Flansche 30 und 31 des Hubrades 23 gebildet, die an dem profilfreien Randbereich 32 des mit Wellenkanten 16 besetzten Fördergurtes 18 angreifen. Über diese beiden stirnseitigen Flansche 30 und 31 werden die notwendigen Zugkräfte auf den Fördergurt 18 übertragen. Die Tiefe der Ausnehmung 27 bzw. das Maß der überstehenden Flansche 30 und 31 entspricht der Höhe der Wellenkanten 16. Dadurch bildet das Hubrad 23 einen Deckel für den Fördergurt 18, so daß das zu entleerende Schüttgut erst hinter dem Hubrad 23, wenn das Obertrum 21 an der Ablenktrommel 19 von dem Hubrad 23 abgehoben wird, entleert werden kann. Der Durchmesser des Hubrades richtet sich dabei nach der gewünschten Hubhöhe am Ende des Längsförderers 4. Das Obertrum 21 wird von dem Hubrad 23 über Stütztrommeln 34 in den Raum zwischen dem jeweiligen Räumpflug 12 und der darüber angeordneten dachförmigen Schutzhaube 13 weitergeführt.

Die Abwurfstelle 24 hinter dem jeweiligen Hubrad 23 entspricht gleichzeitig einer Aufgabestelle 25 der beiden kurzen Querförderer 6, über die das zu entleerende Schüttgut weiter zu einer Aufgabestelle 36 des Senkrechtförderers 7 transportiert wird. Die kurzen Querförderer 6 weisen dabei gemuldete Fördergurte auf.

Über den Senkrechtförderer 7 wird das zu entleerende Schüttgut auf das Schiffsdeck und von dort über einen Abgabeförderer 38 weiter transportiert. Der Senkrechtförderer 7 weist dabei eine S-förmige Förderstrecke auf, mit der ungefähr horizontal angeordneten Aufgabestelle 36, einem senkrechten Förderabschnitt 40 und einer auf dem Schiffsdeck ungefähr horizontal angeordneten Abgabestelle 41. Der Senkrechtförderer 7 ist dabei in üblicher Weise mit seitlich besetzten Wellenkanten 42 und quer dazu ausgerichteten, in Förderlängsrichtung in Abständen angeordneten Mitnehmerleisten 43 ausgeführt.

Anstelle des Senkrechtförderers 7 kann auch in einem nicht näher gezeigten Ausführungsbeispiel ein Steilförderer bzw. ein C-Förderer mit Überkopf-Förderung des Fördergutes vorgesehen sein.

Der Senkrechtförderer 7 ist in der Mitte zwischen den beiden Längsförderern 4 angeordnet, wodurch in Verbindung mit der gleichmäßigen Unterschneidung des Schüttgutes im gesamten Laderaum eine Nachtrimmung des Schiffes während der Entladung nicht erforderlich ist.

**Patentansprüche**

1. Gurtförderanlage in einem selbstentladenden Schiff mit zwei im Bereich des Schiffsbodens in Schiffslängsrichtung verlaufenden Längsförderern (4), denen jeweils ein Räumpflug (12) zugeordnet ist mit einer Übergabeeinrichtung (6) an einem Ende der Längsförderer und mit einem das Fördergut auf das Schiffsdeck transportierenden Steilförderer (7), dadurch gekennzeichnet, daß jeder Längsförderer (4) mit dem Untertrum (20) seines mit seitlichen Wellenkanten (16) besetzten Fördergurtes (18) fördert und an der Übergabeeinrichtung (6) als Umlenktrommel für den Fördergurt ein Hubrad (23) mit einer in Umfangsrichtung umlaufenden Ausnehmung (27) aufweist, in die der Fördergurt mit seinen Wellenkanten so eingreift, daß das Hubrad mit seinen beiden durch die Ausnehmung gebildeten Flanschen (30, 31) an seitlich über die Wellenkanten überstehenden Randbereichen (32) des Fördergurtes angreift, wobei die radiale Tiefe der Ausnehmung im Hubraum der Höhe der Wellenkanten entspricht.

2. Gurtförderanlage nach Anspruch 1, dadurch gekennzeichnet, daß die Obertrume (21) der Fördergurte (18) der Längsförderer (4) jeweils in dem Raum zwischen dem Räumpflug (12) und einer dachförmigen Schutzhaube (13) geführt sind, die oberhalb eines jeden Räumpflugs (12) angeordnet ist.

3. Gurtförderanlage nach Anspruch 1 oder 2, dadurch gekennzeichnet, daß die Übergabeeinrichtung zwei, jeweils einem der beiden Längsförderer (4) zugeordnete kurze Querförderer (6) umfaßt, deren Aufgabeabschnitt (25) sich zwischen dem Hubrad (23) und dem vom Hubrad ablaufenden Obertrum (21) des zugeordneten Fördergurtes (18) befindet.

4. Gurtförderanlage nach Anspruch 3, dadurch gekennzeichnet, daß die Querförderer (6) jeweils einen gemuldeten Fördergurt aufweisen.

5. Gurtförderanlage nach einem der Ansprüche 1 bis 4, dadurch gekennzeichnet, daß der Steilförderer (7) einen ungefähr horizontalen Aufgabeabschnitt unterhalb der Querförderer (6) und ungefähr in der Mitte zwischen den Längsförderern (4) aufweist.

6. Gurtförderanlage nach einem der Ansprüche 1 bis 5, dadurch gekennzeichnet, daß der Steilförderer als Senkrechtförderer (7) ausgebildet ist, dessen Fördergurt seitliche Wellenkanten und quer ausgerichtete Mitnehmerleisten zwischen diesen aufweist.

7. Gurtförderanlage nach einem der Ansprüche 2 bis 6, dadurch gekennzeichnet, daß jeden Hubrad (23) eine Ablenktrommel (19) zugeordnet ist, welche an der wellenkantenfreien Außenseite des ablaufenden Obertrums (21) des zugeordneten Fördergurtes im Sinne einer Vergrößerung des Umschlingungswinkels angreift.

## Claims

1. Belt conveyor plant in an self-discharging ship, comprising two longitudinal conveyors (4) extending in the longitudinal direction of the ship in the area of the ship's bottom whereof each has allocated to it a levelling scraper (12), comprising a transfer system (6) at one extremity of the longitudinal conveyors and a vertical conveyor (7) carrying the material to be conveyed to the ship's deck, characterised in that each longitudinal conveyor (4) conveys with the bottom leg (20) of its conveyor belt (18) equipped with corrugated lateral sides (16) and has a lifting wheel (23) situated at the transfer system (6) as a deflecting drum for the conveyor belt and comprising a peripherally extending recess (27) in which the conveyor belt engages with its corrugated sides, in such a manner that the lifting wheel acts with its two flanges (30, 31), defined by the recess, on marginal sections (32) of the conveyor belt which project laterally beyond the corrugated sides so that the radial depth of the recess corresponds in lifting volume to the height of the corrugated sides.

2. Belt conveyor plant according to claim 1, characterised in that the upper sections (21) of the conveyor belts (18) of the longitudinal conveyors (4) are in each case led within the space between the levelling scraper (12) and a roof-like protective cover (13) which is installed above each levelling scraper (12).

3. Belt conveyor plant according to claim 1 or 2, characterised in that the transfer system comprises two short transverse conveyors (6) allocated to one of the two longitudinal conveyors (4) in each case, whereof the transfer section (25) is situated between the lifting wheel (23) and the upper section (21) of the corresponding conveyor belt (18) running off the lifting whell.

4. Belt conveyor plant according to claim 3, characterised in that the transverse conveyors (6) have a trough-shaped conveyor belt in each case.

5. Belt conveyor plant according to one of the claims 1 to 4, characterised in that the vertical conveyor (7) has an approximately horizontal transfer section beneath the transverse conveyors (6) and approximately in the middle between the longitudinal conveyors (4).

6. Belt conveyor plant according to one of the claims 1 to 5, characterised in that the vertical conveyor is constructed as a perpendicular conveyor (7) whereof the conveyor belt has corrugated lateral sides and transversely aligned entraining bars between these.

7. Belt conveyor plant according to one of the claims 2 to 6, characterised in that each lifting wheel (23) has allocated to it a deflecting drum (19) which acts on the outer side, which has no corrugated sides, of the returning upper section (21) of the corresponding conveyor belt increase of the angle of encirclement.

## Revendications

1. Installation de transport à courroies dans un navire auto-déchargeur, comportant deux convoyeurs longitudinaux (4), s'étendant dans le sens longitudinal du navire dans la zone de la cale de ce dernier, un chariot racleur (12) associé à chacun des convoyeurs longitudinaux, un dispositif de transfert (6) à une extrémité des convoyeurs longitudinaux, et un convoyeur à forte pente (7) transportant la marchandise sur le pont du navire, caractérisée en ce que chauqe convoyeur longitudinal (4) assure le transport par le brin inférieur (20) des sa courroie de transport (18) garnie de ridelles latérales ondulées (16) et présente, à titre de rouleau de détour pour la courroie de transport au droit du dispositif de transfert (6), une roue élévatrice (23) munie d'un évidement (27) qui s'étend dans le sens circonférentiel et dans lequel la courroie de transport s'engage par ses ridelles ondulées de façon que la roue élévatrice, par ses deux collerettes (30, 31) définies par l'évidement, prenne appui sur des bordures (32) que présente la courroie de transport en saillie par rapport aux ridelles ondulées, la profondeur radiale de l'évidement dans l'espace d'élévation correspondant à la hauteur des ridelles ondulées.

2. Installation de transport à courroies selon la revendication 1, caractérisée en ce que les brins supérieurs (21) des courroies de transport (18) des convoyeurs longitudinaux (4) sont guidés chacun dans l'espace situé entre le chariot racleur (12) et un capot de protection (13) en forme de toit, lequel est disposé au-dessus de chaque chariot racleur (12).

3. Installation de transport à courroies selon l'une quelconque des revendications 1 ou 2, caractérisée en ce que le dispositif de transfert comprend deux courts convoyeurs transversaux (6), associés chacun à l'un des deux convoyeurs longitudinaux (4), et dont la région de chargement (25) se trouve entre la roue élévatrice (23) et le brin supérieur (21), qui part de la roue élévatrice, de la courroie de transport associée (18).

4. Installation de transport à courroies selon la revendication 3, caractérisée en ce que chacun des convoyeurs transversaux (6) présente une courroie de transport à auges.

5. Installation de transport à courroies selon l'une quelconque des revendications 1 à 4, caractérisée en ce que le convoyeur à forte pente (7) présente une région de chargement approximativement horizontale en dessours des vonvoyeurs transversaux (6), et approximativement à mi-chemin entre les convoyeurs longitudinaux (4).

6. Installation de transport à courroies selon l'une quelconque des revendications 1 à 5, caractérisée en ce que le convoyeur à forte pente est constitué par un convoyeur vertical (7), dont la courroie de transport présente des ridelles latérales ondulées et, entre elles, des palettes d'entraînement transversales.

7. Installation de transport à courroies selon l'une quelconque des revendications 2 à 6, caractérisée en ce qu'à chaque roue élévatrice (23) est associé un rouleau de détour (19), qui agit sur le côté extérieur, dépourvu de ridelles ondulées, du brin supérieur sortant (21) appartenant à la courroie de transport associée, de façon à augmenter l'arc d'enroulement sur la roue.

FIG. 1

FIG. 2